# EUROPÄISCHE PATENTSCHRIFT

(11) **EP 1 006 637 B1**
(45) Veröffentlichungstag und Bekanntmachung des Hinweises auf die Patenterteilung: **23.06.2004**
(21) Anmeldenummer: 99121921.3
(22) Anmeldetag: 05.11.1999
(51) Int. Cl.: H02G 3/30

(54) **Leitungsführungskanal**
Wire raceway
Goulotte pour câbles

(30) Priorität: 02.12.1998 DE 29821518 U
(43) Veröffentlichungstag der Anmeldung: 07.06.2000
(73) Patentinhaber: Tehalit GmbH & Co. KG, 67716 Heltersberg (DE)
(72) Erfinder: Schnurr, Richard, 66957 Vinningen (DE); Kany, Jean-Michel, 57910 Hambach (FR)
(74) Vertreter: Patentanwälte Möll und Bitterich

(56) Entgegenhaltungen:
- FR-A- 1 167 605
- US-A- 4 905 433

## Beschreibung

Die Erfindung betrifft Leitungsführungskanäle gemäß dem Oberbegriff des Anspruchs 1.

Leitungsführungskanäle der hier relevanten Art (Siehe US-A-4 905 433) bestehen im wesentlichen aus zwei Teilen, einem Unterteil, welches an Wand oder Decke angeschraubt wird und die Leitungen aufnimmt, und einem Deckel, der auf das Unterteil lösbar aufgesetzt wird. Es gibt auch Leitungsführungskanäle mit mehr als einem Deckel.

Die Befestigung der Leitungsführungskanäle an Wand und Decke erfolgt üblicherweise mit Hilfe von Dübeln und Schrauben. Diese Befestigung ist dann optimal, wenn die Schrauben exakt senkrecht zur Kanalrückwand gerichtet sind und der Schraubenkopf flach auf der Kanalrückwand aufliegt. In manchen Fällen macht dies jedoch Probleme, sei es, daß der Kanal in einer schwer zugänglichen Ecke montiert werden soll, sei es, daß der Kanal Ein- und Anbauten besitzt, die die Zugänglichkeit zu den Schraublöchem und Schrauben erschweren

Hier setzt nun die vorliegende Erfindung ein, die sich die Aufgabe gestellt hat, die Leitungsführungskanäle derart weiterzubilden, daß auch unter erschwerten Bedingungen eine einwandfreie Wand- und Deckenmontage möglich ist.

Diese Aufgabe wird gelöst durch einen Leitungsführungskanal mit den Merkmalen des Anspruchs 1.

Dank der vorliegenden Erfindung ist die Zugänglichkeit für Bohrmaschinen und Schraubendreher wesentlich verbessert. Außerdem ist eine einwandfreie und sachgerechte Montage der Befestigungsschrauben moglich Die Schraubkopfe liegen flach auf, so daß sich Kabel und Drähte zwischen Kopf und Kanalrückwand nicht mehr verklemmen können.

Gemäß einer ersten Ausgestaltung der Erfindung ist der die Auflagefläche für die Schraubköpfe bildende Abschnitt der Rückwand abgewinkelt. Auf der Außenseite der Rückwand sind längsverlaufende Rippen angeformt, die den abgewinkelten Abschnitt gegen Wand oder Decke abstützen. Diese Rippen verhindern, daß der abgewinkelte Rückwandabschnitt hohl liegt und beim Eindrehen der Schrauben verformt wird, was wiederum nachteilige Auswirkungen auf die Formhaltigkeit des Leitungsführungskanals hätte.

Gemäß einer zweiten Ausgestaltung der Erfindung sind auf der Innenseite der Rückwand längsverlaufende Rippen angeformt, die in ihrer Höhe so abgestuft sind, daß sie die Auflagefläche bilden. Auch hier finden die Befestigungsschrauben eine einwandfreie, durch die freien Enden der Rippen gebildete Auflage.

In beiden Fällen wirken die längsverlaufenden Rippen auch als Versteifungsrippen, so daß die Wanddicke im Bereich des abgewinkelten Abschnitts deutlich reduziert werden kann.

Anhand der Zeichnung soll die Erfindung in Form von Ausführungsbeispielen näher erläutert werden. Es zeigen jeweils als Querschnitt
- Fig 1: einen ersten Leitungsfuhrungskanal und
- Fig 2: einen zweiten Leitungsführungskanal.

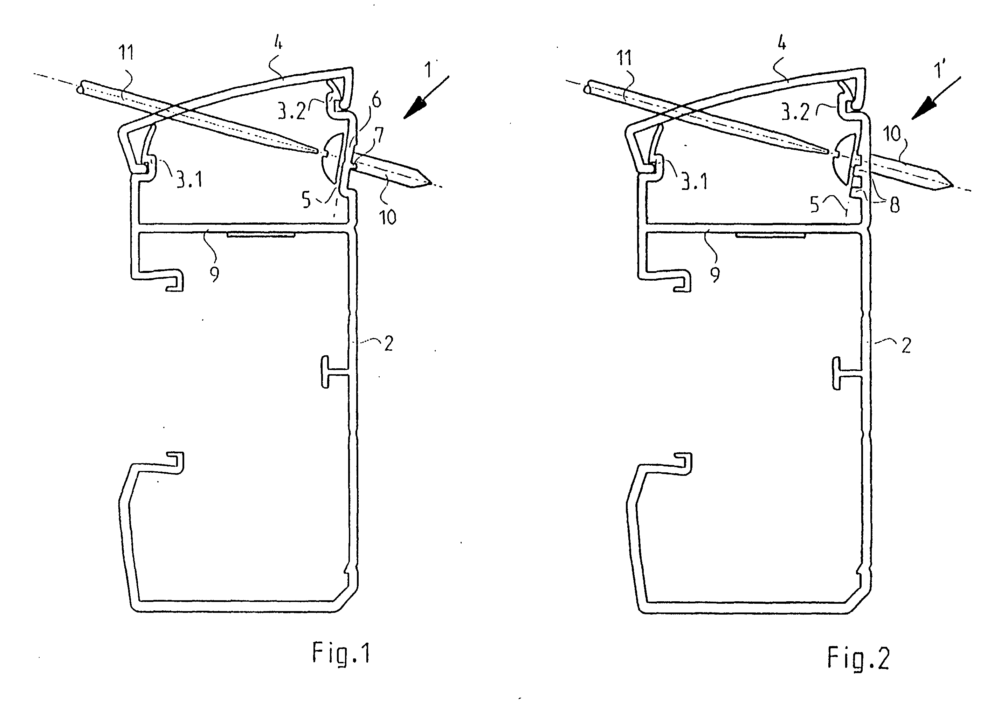

Fig. 1 zeigt einen Querschnitt durch einen Leitungsführungskanal 1 mit einer Rückwand 2. Der Leitungsführungskanal 1 ist durch eine Trennwand 9 in zwei Kammern unterteilt. Jede Kammer kann durch einen Deckel verschlossen werden.

Im vorliegenden Ausführungsbeispiel ist die obere Kammer mit einem außen aufgesetzten Deckel 4 verschlossen. Dazu rastet der Deckel in die korrespondierenden Verschlußprofile 3.1, 3.2 des Leitungsführungskanals 1 ein.

Um den Leitungsführungskanal 1 im Bereich der oberen Kammer an eine Wand oder eine Decke schrauben zu können, ist ein Abschnitt 6 der Rückwand 2 gegenüber der Ebene der Rückwand 2 keilförmig abgewinkelt, so daß eine gut zugängliche, ebene Auflagefläche 5 für den Kopf einer Befestigungsschraube 10 entsteht. Die Befestigungsschraube 10 kann daher bei abgenommenem Deckel 4 bequem eingeschraubt werden, wobei die Klinge eines Schraubendrehers 11 nicht mit dem vorderen Verschlußprofil 3.1 kollidiert.

Auf der Außenseite des abgewinkelten Abschnitts 6 erkennt man eine längslaufende Versteifungsrippe 7, die den abgewinkelten Abschnitt 6 stabilisiert. Ohne diese Rippe 7 würde die Gefahr bestehen, daß beim Eindrehen der Schraube 10 das Profil des Leitungsführungskanals 1 verbogen wird, so daß sich das hintere Deckelverschlussprofil 3.2 in Richtung auf das vordere Deckelverschlussprofil 3.1 bewegt und der Deckel 4 nicht mehr fest aufsitzt.

Fig. 2 zeigt eine alternative Ausführung eines Leitungsführungskanals 1'. In diesem Fall ist die Rückwand 2 im Bereich der Befestigungsschraube 10 glatt durchgezogen. Auf ihre Innenseite sind längslaufende Versteifungsrippen 8 angeordnet, die in der Hohe so abgestuft sind, daß ihre oberen Enden die abgewinkelte Auflagefläche 5 für die Kopfe der Schrauben 10 bilden.

Bei beiden Ausführungsbeispielen wirken die Rippen 7, 8 zusätzlich versteifend auf die Rückwand 2 des Leitungsführungskanals 1,1', so daß in diesem Bereich die Stärke der Rückwand 2 reduziert werden kann, ohne daß die Festigkeit darunter leidet.

## Patentansprüche

1. Leitungsführungskanal (1,1') mit einer Rückwand (2), einem Verschlussprofil (3.1, 3.2) zum lösbaren Aufsetzen eines Deckels (4) und mit vorbereiteten Einrichtungen, z.B. Löchern, in der Rückwand (2) für die Befestigung des Leitungsführungskanals (1,1') an Wänden oder Decken mittels Dübel und Schrauben (10), **gekennzeichnet durch** das Merkmal:
- der Bereich der Rückwand (2), der die Auflagefläche (5) für die Köpfe der Schrauben (10) bildet, ist gegen die Ebene der Rückwand (2) so abgewinkelt, daß das Bohren der Dübellöcher und das Eindrehen der Schrauben (10) erleichtert ist.

2. Leitungsführungskanal nach Anspruch 1, **gekennzeichnet durch** die Merkmale:
- der die Auflagefläche (5) bildende Abschnitt (6) der Rückwand (2) ist abgewinkelt,
- wenigstens eine auf der Außenseite der Rückwand (2) angeformte, längsverlaufende Rippe (7) stützt den abgewinkelten Abschnitt (6) gegen Wand oder Decke ab.

3. Leitungsführungskanal nach Anspruch 1, **gekennzeichnet durch** die Merkmale:
- auf der Innenseite der Rückwand (2) sind längsverlaufende Rippen (8) angeformt,
- die Rippen (8) sind in der Höhe so abgestuft, daß sie die Auflagefläche (5) bilden

## Claims

1. Wiring trunking (1, 1') with a rear wall (2), a closure profile (3.1, 3.2) for mounting a cover (4) in a releasable manner and with prepared devices, e.g. holes, in the rear wall (2) for fastening the wiring trunking (1, 1') to walls or ceilings by means of dowels and screws (10),
**characterised by** the feature:
- the region of the rear wall (2) which forms the bearing surface (5) for the heads of the screws (10) is bent towards the plane of the rear wall (2) so as to facilitate the processes of boring the dowel holes and screwing in the screws (10).

2. Wiring trunking according to Claim 1, **characterised by** the features:
- the portion (6) of the rear wall (2) which forms the bearing surface (5) is bent,
- at least one longitudinally extending rib (7), which is moulded onto the outside of the rear wall (2), supports the bent portion (6) against the wall or ceiling.

3. Wiring trunking according to Claim 1, **characterised by** the features:
- longitudinally extending ribs (8) are moulded onto the inside of the rear wall (2),
- the ribs (8) are vertically stepped such that they form the bearing surface (5).

## Revendications

1. Goulotte de câbles (1, 1') comportant une paroi arrière (2), un profilé de fermeture (3.1, 3.2) pour mettre en place de façon amovible un couvercle (4) et des dispositifs préparés, par exemple des trous dans la paroi arrière (2) pour fixer la goulotte de câbles (1, 1') sur des murs ou des plafonds au moyen de chevilles et de vis (10), **caractérisée en ce que** la zone de la paroi arrière (2) constituant la surface d'appui (5) pour les têtes des vis (10) est coudée vers le plan de la paroi arrière (2) de manière à faciliter le perçage des trous pour les chevilles et le vissage des vis (10).

2. Goulotte de câbles selon la revendication 1, **caractérisée en ce que** le segment (6) de la paroi arrière (2) qui constitue la surface d'appui (5) est coudé, et **en ce que** le segment coudé (6) prend appui sur le mur ou le plafond à l'aide d'au moins une nervure (7) longitudinale ménagée sur la face extérieure de la paroi arrière (2).

3. Goulotte de câbles selon la revendication 1, **caractérisée en ce que** des nervures longitudinales (8) sont ménagées sur la face intérieure de la paroi arrière (2), et **en ce que** les nervures (8) sont étagées de telle sorte qu'elles forment la surface d'appui (5).
